# DEMANDE DE BREVET EUROPEEN

(11) **EP 1 249 198 A1**
(43) Date de publication de la demande: **16.10.2002**
(21) Numéro de dépôt: 02370012.3
(22) Date de dépôt: 10.04.2002
(51) Int. Cl.: A47J 47/00

(54) **Article destiné à servir de surface de pose pour de la nourriture, notamment en vue de son découpage**

(30) Priorité: 12.04.2001 FR 0105052
(71) Demandeur: Lamin'art Sarl, 62850 Journy (FR)
(72) Inventeur: Yeates, Christopher, 62850 Journy (FR)
(74) Mandataire: Duthoit, Michel

(57) **Abrégé**

L'invention concerne un article destiné à servir de surface de pose pour de la nourriture, notamment en vue de son découpage, comprenant une planche (1) apte à définir ladite surface.

Selon l'invention, ledit article est muni sur une partie au moins de la périphérie de ladite planche (1) de moyens (2) d'amortissement des chocs.

## Description

L'invention concerne un article destiné à servir de surface de pose pour de la nourriture, notamment en vue de son découpage.

Toutefois, bien que plus particulièrement prévue pour de telles applications, elle pourra être utilisée en tout occasion où l'on nécessite une surface de pose pour de la nourriture.

Actuellement, il est connu des articles, communément appelés planches à découper, dont on se sert comme support pour, par exemple, trancher, couper en morceaux, émincer, évider, éplucher et/ou hacher tous types de nourritures, telles que viande, légumes, fruits, aliments aromatiques et/ou autres. On peut ainsi les stocker plus facilement, les servir à table, et/ou les utiliser dans différentes recettes culinaires.

De telles planches présentent généralement une résistance satisfaisante aux efforts exercés sur leurs faces inférieure et supérieure. Elles sont toutefois plus fragiles vis-à-vis de chocs latéraux. En outre, leur utilisation reste limitée.

Par ailleurs, elles sont souvent munies de gorges servant à récolter et drainer le jus éventuellement recueilli lors du découpage et/ou hachage des aliments.

Dans les planches à découper actuellement connues, ces gorges sont réalisées par reprise lors de la fabrication et nécessitent à cette fin des outillages spécifiques.

Le but de la présente invention est de proposer un article destiné à servir de surface de pose pour de la nourriture, notamment en vue de son découpage, qui pallie les inconvénients précités et soit plus résistant aux chocs, et notamment aux chocs latéraux.

Un autre but de la présente invention est de proposer un article destiné à servir de surface de pose pour de la nourriture, notamment en vue de son découpage, qui puisse en outre être utilisé pour le service.

Un autre but de la présente invention est de proposer un article destiné à servir de surface de pose pour de la nourriture, notamment en vue de son découpage, qui permet de récolter le jus susceptible de provenir de la nourriture, tout en restant de fabrication simple.

D'autres buts et avantages de l'invention apparaîtront au cours de la description qui va suivre qui n'est donnée qu'à titre indicatif et qui n'a pas pour but de la limiter.

L'invention concerne un article destiné à servir de surface de pose pour de la nourriture, notamment en vue de son découpage, comprenant une planche apte à définir ladite surface, caractérisé par le fait que ledit article est muni sur une partie au moins de la périphérie de ladite planche de moyens d'amortissement des chocs latéraux.

L'invention sera mieux comprise à la lecture de la description suivante, accompagnée des dessins en annexe parmi lesquels :
- la figure 1 est une vue de dessus d'un exemple de réalisation de l'article conforme à l'invention,
- la figure 2 est une vue de coupe selon la ligne II-II, représentée à la figure 1,
- la figure 3 est une vue de coupe selon la ligne III-III, représentée à la figure 1,
- la figure 4 est une vue de coupe selon la ligne IV-IV, représentée à la figure 1.

L'invention concerne un article destiné à servir de surface de pose pour de la nourriture, notamment en vue de son découpage.

Comme illustré aux différentes figures, il comprend une planche 1, apte à définir ladite surface et, avantageusement, à autoriser un découpage de ladite nourriture sur ladite surface.

Par « découpage », on entend toute opération consistant à trancher, couper en morceaux, émincer, évider, éplucher, hacher et/ou toute autre intervention servant à séparer en plusieurs parties un morceau de nourriture entier, ou en tous cas plus gros, notamment à l'aide d'un instrument.

Selon l'invention, ledit article est muni sur une partie au moins de la périphérie de ladite planche 1 de moyens 2 d'amortissement des chocs.

Ledit article est ainsi rendu plus résistant, plus particulièrement aux chocs qui risqueraient de lui être fatal, à savoir les chocs dirigés vers la tranche 3 de la planche 1, dénommés chocs latéraux. Il est à noter qu'un tel avantage permet non seulement d'éviter que l'article ne soit endommagé, après achat, mais permet encore, avant achat, de faciliter son conditionnement sans craindre les risques d'endommagement. Par exemple, il n'est plus nécessaire d'utiliser des emballages résistants aux chocs, un simple film de protection contre la poussière pouvant suffire.

Ladite planche 1 est, notamment, sensiblement rectangulaire et présente des sommets arrondis. Elle est constituée, par exemple, de matériau minéral, à savoir verre, granit, marbre ou similaire, de bois et/ou de matériaux synthétiques.

Les faces supérieure 4 et inférieure 5 de la planche 1 seront, notamment, planes, au moins dans leur partie apparente. La surface de pose de la nourriture est prévue, par exemple, au niveau de ladite face supérieure 4.

Lesdits moyens d'amortissement 2 sont prévus, notamment, de manière continue sur toute la périphérie de la planche 1 au moins au niveau de la tranche 3 de la planche 1. Ils pourront être amovibles ou fixés à ladite planche 1, notamment par collage.

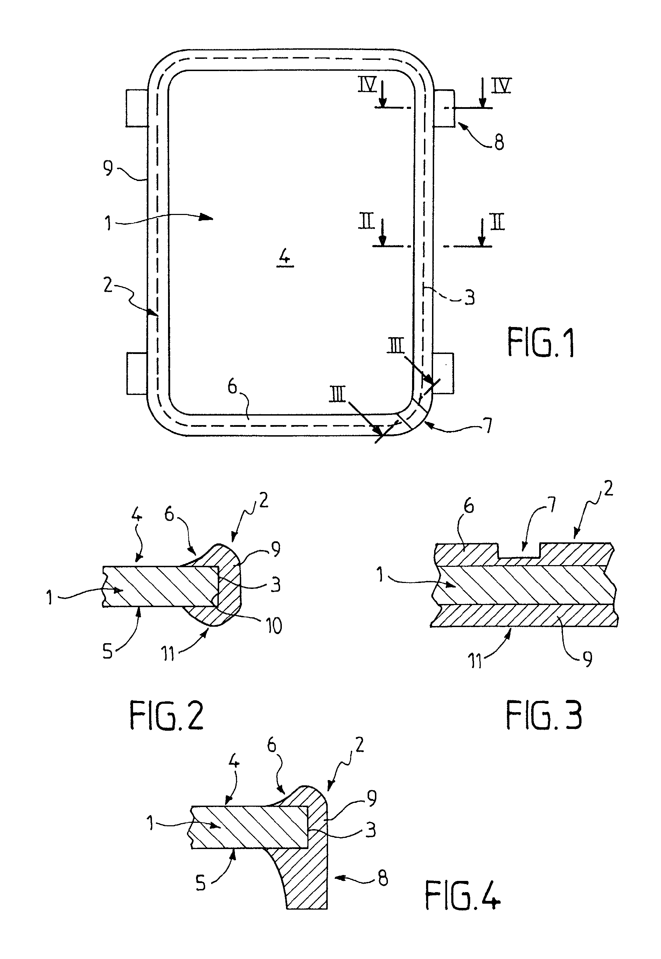

Comme illustrés à la figure 2, ils pourront constituer un rebord 6 s'élevant à partir de ladite surface de pose de façon à retenir les liquides, par exemple le jus, pouvant provenir de la nourriture, sur ladite planche 1.

Comme illustré à la figure 3, ledit rebord 6 pourra présenter au moins un canal 7 d'écoulement desdits liquides hors dudit article. Ledit canal 7 est prévu, notamment, sur toute ou partie de la hauteur dudit rebord 6.

Comme illustrés à la figure 4, lesdits moyens d'amortissement 2 pourront également définir des pieds de support 8 de ladite planche 1. Ledit article pourra ainsi être utilisé comme plateau de service.

Ladite planche 1 présente au niveau de sa tranche 3 et/ou au voisinage de celle-ci sur ses faces supérieure 4 et/ou inférieure 5, éventuellement, un état de surface apte à renforcer l'accrochage desdits moyens d'amortissement 2 sur la planche 1. A cette fin, cette dernière est rendue localement rugueuse. Dans le cas de planches en matériau minéral, on pourra pour cela éviter de polir leurs bords.

Lesdits moyens d'amortissement 2 sont constitués, par exemple, d'un jonc 9. Ledit jonc 9 est formé, notamment, d'un matériau ou d'un mélange de matériaux aptes à absorber les chocs. Il pourra s'agir, par exemple, d'un ou plusieurs matériaux élastomères.

Ledit jonc 9 est, notamment, bi-matière. Il est constitué, par exemple, d'un noyau de matériau relativement dur, revêtu d'une couche de matériau plus souple. La couche de matériau souple assure la fonction d'absorption des chocs tandis que le noyau protège la planche des coups de couteaux ou autres instruments coupants. Ledit noyau pourra éventuellement être en métal et la couche de matériau souple en caoutchouc.

Ledit jonc 9 est fixé, notamment, au niveau de la tranche 3 de ladite planche 1. Comme déjà dit, il pourra être prévu de façon continue le long de la périphérie de celle-ci.

Le matériau ou le mélange de matériaux constituant ledit jonc 9 permet, par exemple, son maintien et/ou sa mise en place sur ladite planche 1 par déformation élastique.

Ledit jonc 9 présente, par exemple, une gorge 10 dont les dimensions sont aptes à autoriser l'insertion de ladite planche 1, par sa tranche, dans ladite gorge 10 et/ou le maintien dudit jonc 9 sur ladite planche 1.

Ledit rebord 6 est situé, notamment, au-dessus de ladite gorge 10. Ledit canal 7 se trouve, par exemple, au niveau d'une partie du jonc 9 coopérant avec l'un des sommets de la planche 1. Ledit canal pourra être revêtu d'un film de protection, en métal ou autre matériau. Ledit film, prévu souple, pourra être prolongé tout le long dudit jonc.

Les éventuels pieds 8 seront prévus, dans la masse, dans des parties du jonc 9 se trouvant également au voisinage des sommets de la planche 1, du côté de sa face inférieure 5. Leur hauteur permettra le passage des mains de l'utilisateur sous la planche pour autoriser son soulèvement.

Le bord inférieur 11 du jonc 9 pourra encore être rendu antidérapant et servir de support.

Naturellement, d'autres modes de mise en oeuvre, à la portée de l'homme de l'art, auraient pu encore être envisagés sans pour autant sortir du cadre de l'invention.

## Revendications

1. Article destiné à servir de surface de pose pour de la nourriture, notamment en vue de son découpage, comprenant une planche (1) apte à définir ladite surface, **caractérisé par le fait que** ledit article est muni sur une partie au moins de la périphérie de ladite planche (1) de moyens (2) d'amortissement des chocs latéraux.

2. Article selon la revendication 1, dans lequel lesdits moyens d'amortissement (2) sont prévus de manière continue sur toute la périphérie de la planche (1) au moins au niveau de la tranche (3) de la planche (1)

3. Article selon la revendication 2, dans lequel lesdits moyens d'amortissement (2) sont aptes à constituer un rebord (6) s'élevant à partir de ladite surface de pose, de façon à retenir les liquides pouvant provenir de la nourriture, sur ladite planche (1).

4. Article selon la revendication 3, dans lequel ledit rebord (6) présente au moins un canal (7) d'écoulement desdits liquides hors dudit article, ledit canal (7) étant prévu sur toute ou partie de la hauteur dudit rebord (6).

5. Article selon la revendication 1, dans lequel lesdits moyens d'amortissement (2) définissent des pieds (8) de support de ladite planche (1).

6. Article selon la revendication 1, dans lequel ladite planche (1) présente au niveau de sa tranche (3) et/ou du voisinage de celle-ci, sur ses faces supérieure (4) et/ou inférieure (5), un état de surface apte à renforcer l'accrochage desdits moyens d'amortissement sur la planche (1).

7. Article selon la revendication 1, dans lequel lesdits moyens d'amortissement (2) sont constitués d'un jonc (9), formé d'un matériau ou d'un mélange de matériaux, apte à absorber les chocs.

8. Article selon la revendication 7, dans lequel ledit jonc est fixé au niveau de la tranche (3) de ladite planche (1) et/ou de façon continue le long de la périphérie de ladite planche (1).

9. Article selon l'une quelconque des revendications 7 ou 8, dans lequel le matériau ou le mélange de matériaux constituant ledit jonc (9) permet son maintien et/ou sa mise en place sur ladite planche (1), par déformation élastique.

10. Article selon la revendication 9, dans lequel ledit jonc (9) présente une gorge (10), les dimensions de cette dernière étant aptes à autoriser l'insertion de ladite planche (1) par sa tranche (3) dans ladite gorge (11).
